# EUROPEAN PATENT APPLICATION

(11) **EP 1 806 207 A1**
(43) Date of publication of application: **11.07.2007**
(21) Application number: 05805295.2
(22) Date of filing: 25.10.2005
(51) Int. Cl.: B24B 55/04, B23Q 11/08, B24B 5/00

(54) **GRINDING MACHINE**

(30) Priority: 29.10.2004 JP 2004315831
(71) Applicant: JTEKT Corporation, Osaka-shi Osaka 542-8502 (JP)
(72) Inventor: WAKAZONO, Yoshio c/o JTEKT Corporation, Osaka 542-8502 (JP)
(86) International application number: PCT/JP2005/019634
(87) International publication number: WO 2006/046581

(57) **Abstract**

A grinding machine enabling the easy maintenance and inspections of mechanisms arranged therein, an increase in visibility when the states of a workpiece and a grinding wheel are confirmed, and the easy loading/unloading of the workpiece and the easy replacement of the grinding wheel. The grinding machine comprises a workpiece supporting/driving device, a wheel work head, a wheel head feeder, a coolant supply unit, a cover covering internal devices such as the workpiece supporting/driving device, the wheel work head, the wheel head feeder, and the coolant supply unit, and an open/close door formed at a part of the working space side upper surface of the cover and allowing at least the loading/unloading of the workpiece and the replacement of the grinding wheel.

## Description

### TECHNICAL FIELD

This invention relates to a grinding machine to grind a workpiece by using a rotating grinding wheel and, in particular, to a grinding machine that allows easy maintenance and inspection of mechanisms arranged therein, enhancement in visibility required when confirming the state of a workpiece and a grinding wheel, easy loading/unloading of the workpiece, and easy replacement of the grinding wheel.

### BACKGROUND ART

Conventionally, a grinding machine is known in which a grinding wheel head supporting a grinding wheel to be rotatably driven is mounted over a bed through a sliding mechanism to be movable toward a work head and a foot stock, and which is operable to grind, by using the grinding wheel, a workpiece supported between the work head and the foot stock to be rotatably driven while supplying a coolant over the workpiece from a coolant nozzle (e.g., Patent Literatures **1** and **2**). Some of the grinding machines have a cover for preventing dispersal of a coolant, a grinding dust etc. and for protecting the machine from external dust etc.

Patent Literature **1** discloses a grinding machine that has a whole cover which covers the whole of the work head, the foot stock, the grinding wheel head and the sliding mechanism of the grinding wheel head, a sliding door is formed in the middle portion of the front face of the bed to open/close in loading/unloading of the workpiece, and double doors are formed on both sides of the whole cover to allow the maintenance and inspection of devices such as the sliding mechanism of the grinding wheel head.

Patent Literature **2** discloses a grinding machine that allows the replacement of a workpiece through a workpiece loading/unloading port by using a workpiece loading/unloading device when a protective cover is open.

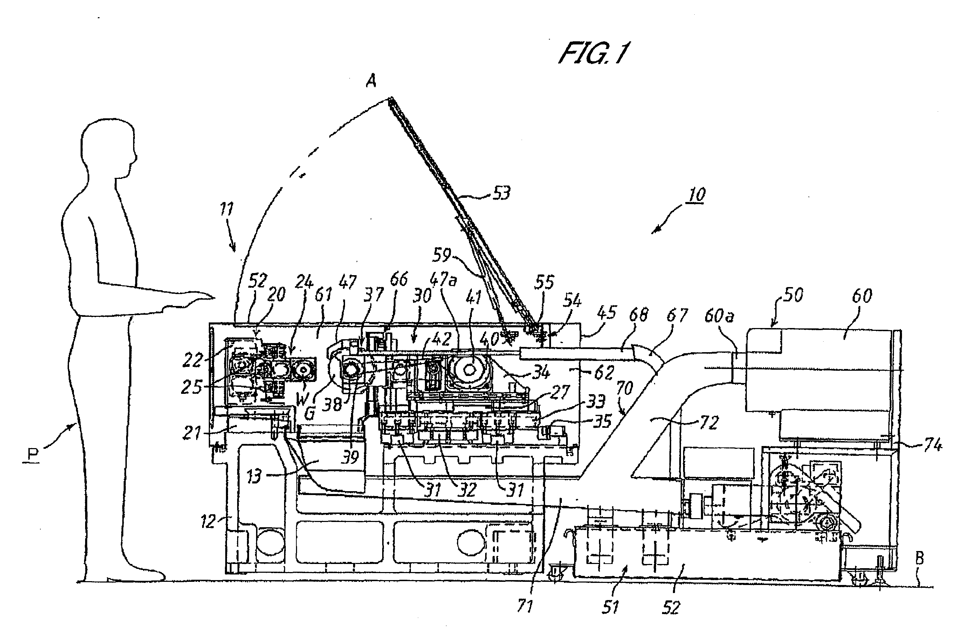

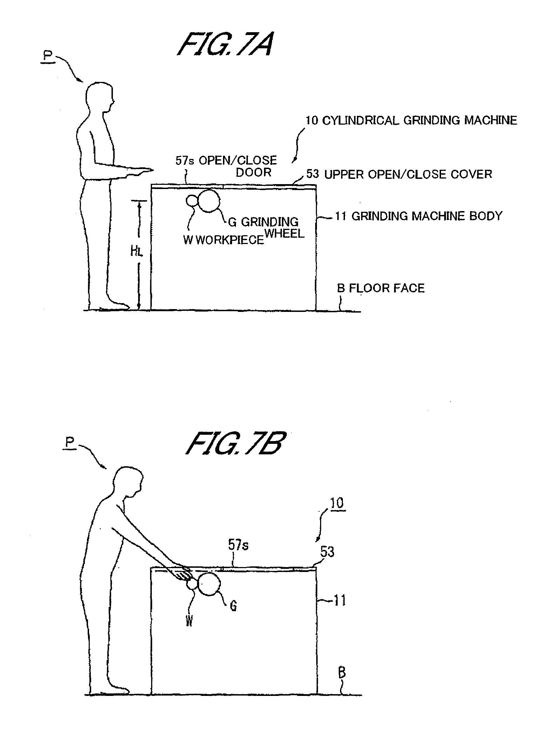

Patent Literature **1**: JP-**2003-117828** (page **4**-right column, page **5**-right column to page **6**-left column, FIG.**1,** and FIG.**7**)

Patent Literature **2**: JP-**2002-103216** (page **3**-left column, FIG.**1**, and FIG.**2**)

### DISCLOSURE OF INVENTION

### Problems to be solved by the invention

However, the conventional grinding machine in Patent Literatures **1** and **2** has problems that ergonomic data are not considered in design regarding to workability in loading/unloading a workpiece, in replacing a grinding wheel or in maintaining and inspecting mechanisms arranged therein, or to visibility in confirming the state of the workpiece and the grinding wheel. In particular, relationships between working efficiency etc. arid the rotation center position of the workpiece, the position of the grinding wheel spindle, the height of the upper surface of the machine, the diameter of the grinding wheel, the material of the wheel, the dimensions and shape of the opening portion of the cover, the dimensions and shape of the open/close door formed on the cover and the like are not sufficiently considered. Therefore, in the conventional grinding machine, the loading/unloading of the workpiece, the replacement of the grinding wheel or the maintenance and inspection of mechanisms arranged therein are conducted by opening a door formed on the side surface of the whole cover, and the loading/unloading of the workpiece or the replacement of the workpiece is needed to conduct by using a workpiece loading/unloading device through a workpiece loading/unloading port. Thus, the working efficiency is low and, in particular, it is difficult for a worker to load/unload of the workpiece or to replace the grinding wheel without using a working step.

Therefore, it is an object of the invention to provide a grinding machine that allows easy maintenance and inspection thereof, enhancement in visibility required when confirming the state of the workpiece and the grinding wheel, easy loading/unloading of the workpiece and easy replacement of the grinding wheel. In particular, the invention provides a grinding machine with a structure considered to allow the worker to naturally take a posture based on ergonomic data.

### Means for solving the problems

In order to achieve the object described above, the first invention provides a grinding machine comprising: a workpiece supporting/driving device anteriorly mounted on a bed, and supporting a workpiece to be rotatably driven; a grinding wheel head comprising a bearing portion supporting a wheel spindle to be rotatably driven on which a grinding wheel is mounted, and a base mounted over the bed to be relatively movable to the workpiece through a grinding wheel head sliding mechanism; a grinding wheel head feeder moving the grinding wheel head forward or backward to the workpiece supporting/driving device; a coolant supply unit supplying a coolant to a working area in which the grinding wheel grinding processing the workpiece; a cover covering internal devices such as the workpiece supporting/driving device, the grinding wheel head, the grinding wheel head feeder, the coolant supply unit; and an open/close door formed on a part of an upper surface in working space side of the cover, being capable of at least loading/unloading of the workpiece and replacing the grinding wheel.

In the invention described above, the cover can comprise an upward open/close door or a sliding open/close door at least a part of the upper surface.

Further, in the invention described above, the open/close door can be formed on the upward open/close door or the sliding open/close door.

Further, in the invention described above, the open/close door can comprise large size enough for a part of the workpiece to be visible in the workpiece supporting direction, and the open/close door can comprise large size as a length in a sliding direction of the grinding wheel head enough for a part of the grinding wheel to be visible from the open/close door in the sliding direction of the grinding wheel head at the stop of the grinding work.

Further, in the invention described above, the open/close door can comprise the size larger than the maximum length of the workpiece in the workpiece supporting direction and larger than the maximum diameter of the grinding wheel head in the sliding direction.

Further, in the invention described above, the workpiece can comprise a rotation center position at not less than **200** mm and not more than **400** mm from the front face of machine, and comprise a rotation center position at not less than **850** mm and not more than **1000** mm from the floor face.

Further, in the invention described above, the wheel spindle can comprise a center position thereof at not less than **250** mm and not more than **500** mm from the front face of machine, and at not less than **850** mm and not more than **1000** mm from the floor face.

Further, in the invention described above, the grinding machine can comprise a height of not less than **900** mm and not more than **1100** mm from the floor face.

Further, in the invention described above, the grinding wheel can comprise an outer diameter of not less than **100** mm and not more than **200** mm, and comprise CBN grinding wheel having aluminum or titanium disk as a core.

Further, in the invention described above, the open/close door can be formed within a region of not less than **200** mm and not more than **700** mm from the front face of machine, and not less than **1000** mm and not more than **1200** mm from a floor face.

Furthermore, in the invention described above, the open/close door can be formed on a region in which the workpiece or the grinding wheel head is replaceable in an open condition.

In order to achieve the object described above, the second invention provides a grinding machine comprising: a workpiece supporting/driving device anteriorly mounted on a bed, and supporting a workpiece to be rotatably driven; a grinding wheel head comprising a bearing portion supporting a wheel spindle to be rotatably driven on which a grinding wheel is mounted, and a base mounted over the bed to be relatively movable to the workpiece through a grinding wheel head sliding mechanism; a grinding wheel head feeder moving the grinding wheel head forward or backward to the workpiece supporting/driving device; a coolant supply unit supplying a coolant to a working area in which the grinding wheel grinding processing the workpiece; and a cover covering internal devices such as the workpiece supporting/driving device, the grinding wheel head, the grinding wheel head feeder, the coolant supply unit, and formed below a height of an arm turning portion just proximal to a handling portion of a working robot performing a lift up/down operation, so that a loading/unloading the internal portion of the workpiece and a replacement of the grinding wheel can be conducted from a working space in a front face, centering around the lift up/down operation.

Furthermore, in the invention described above, the cover can comprise an open/close door within a region in which the lift up/down operation can be performed.

Furthermore, in the invention described above, the loading/unloading of the workpiece, the replacement of the grinding wheel, and the lift up/down operation can be conducted by the robot.

Furthermore, in the invention described above, the cover can be formed below the height of the turning portion of the robot.

In order to achieve the object described above, the third invention provides a grinding machine comprising: a workpiece supporting portion supporting a workpiece to be processed on a first rotating shaft; a grinding wheel supporting portion supporting a grinding wheel to process the workpiece on a second rotating shaft; a side cover enclosing the workpiece supporting portion and the grinding wheel supporting portion from the side; a upper cover enclosing a first opening portion formed on the upper side by the side cover; and an open/close member formed on a working space side of the upper cover, to open/close a second opening portion for a loading/unloading of the work piece, and a replacement of the grinding wheel; and the second opening portion is formed on the upper cover, so that a straight line perpendicular to the first and second turning shafts in a center position thereof comprises a certain inclined angle to a floor face.

Furthermore, in the invention described above, the second opening portion can be formed on the upper cover, so as to comprise an inclined angle of **45** degrees to **75** degrees as the certain inclined angle.

### Advantages of the invention

According to the invention, the opening portion is formed on the cover so that the loading/unloading of the workpiece and the replacement of the grinding wheel can be performed through at least an upper or front surface of the machine to facilitate the grinding work etc. This can enhance easy maintenance and inspection of the mechanisms arranged therein, visibility required when confirming the state of the workpiece and the grinding wheel, easy loading/unloading of the workpiece and easy replacement of the grinding wheel. Generally, it is usual that workers are each working in different postures even if they have knowledge about the ergonomic data. However, in the invention, since the opening portion of the cover is formed at a position determined by considering the ergonomic data, the workers can work naturally in posture based on the ergonomic data.

### BRIEF DESCRIPTION OF DRAWINGS

**FIG.1** is a side view showing a cylindrical grinding machine in a first preferred embodiment according to the invention,
**FIG.2** is a plan view showing the cylindrical grinding machine shown in **FIG.1** as an overhead view when an upper open/close cover is dismounted,
**FIG.3** is a plan view showing the grinding machine shown in **FIG.1** as an overhead view,
**FIGS.4A** to **4E** are schematic views showing the position and dimensions of each part in the first preferred embodiment,
**FIG.5** is a side view showing a cylindrical grinding machine in a second preferred embodiment according to the invention,
**FIG. 6A** is a schematic view showing a cylindrical grinding machine in a third preferred embodiment when an upper open/close door is closed,
**FIG. 6B** is a schematic view showing a cylindrical grinding machine in the third preferred embodiment when the upper open/close door is opened,
**FIG. 7A** is a schematic view showing a cylindrical grinding machine in a fourth preferred embodiment when an open/close door of sliding type is closed,
**FIG.7B** is a schematic view showing a cylindrical grinding machine in the fourth preferred embodiment when the open/close door of sliding type is opened,
**FIG. 8** is a side view showing a fifth preferred embodiment,
**FIG.9** is an explanatory view showing how an operating force of arm changes dependent on the directions, and
**FIG.10** is an explanatory view showing a front horizontal plane area to facilitate a working which is conducted near a height of body section.

### Explanation of reference numerals

- **10**: cylindrical grinding machine
- **11**: grinding machine body
- **12**: bed
- **13**: coolant chute
- **24, 26**: left and right work head
- **27, 32**: linear motor
- **30**: grinding wheel head
- **33**: slide
- **31, 35**: linear guide
- **37**: bearing portion
- **45**: side enclosing cover
- **47**: coolant supply nozzle
- **50**: attachment device
- **51**: coolant supply unit
- **52**: open port
- **53**: upper open/close cover
- **53s**: slide open/close cover
- **54**: bracket
- **55**: hinge
- **57**, **57**u, **57**s: open/close door
- **570**: hinge
- **58**: slide rail
- **59**: gas cylinder
- **61**: working area
- **62**: sliding area
- **63**: frame body
- **64**a, **64**b: left and right accordion cover
- **65**: passing hole accordion cover
- **66**: separating cover
- **69**: lever mechanism
- **73**: rodless cylinder
- **100**: handling robot
- **101**: robot body
- **102**: first arm turning portion
- **103**: first arm
- **104**: second arm turning portion
- **105**: second arm
- **106**: handling portion
- G: grinding wheel
- Wh: grinding wheel disk
- W: workpiece
- B: floor face
- P: worker

### BEST MODE FOR CARRYING OUT THE INVENTION

### First embodiment

A grinding machine in a first preferred embodiment according to the invention will be explained below referring to the attached drawings.

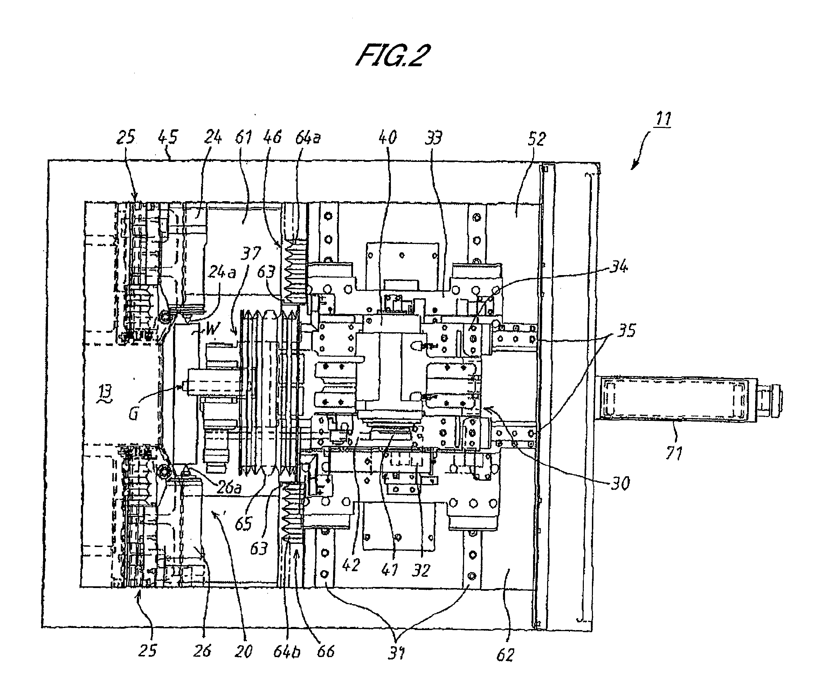

**FIG.1** is a side view showing a cylindrical grinding machine in the first preferred embodiment, and **FIG.2** is a plan view showing the cylindrical grinding machine shown in **FIG.1** as an overhead view when an upper open/close cover is dismounted. The cylindrical grinding machine **10** comprises a grinding machine body **11** and an attachment device **50.** In the **FIGs.1, 2** the attachment device **50** comprises a coolant supply unit **51**, a mist collector **60,** and a duct device **70** connecting the devices **51, 60** to the grinding machine body **11.** The grinding machine body **11** comprises a bed **12,** and the bed **12** mounts a workpiece supporting driving device**20** on an upper surface of the front portion in left side of **FIG.1** and a grinding wheel head 30 on an upper surface of the rear portion in right side of **FIG.1.** The workpiece supporting driving device**20** comprises a left work head **24** and a right work head **26** which are respectively mounted and fixed on side surfaces of supports **22** mounted uprightly from the a work table **21** fixed on the bed **12**, so as to be position-adjustable in up/down direction in **FIG.2** along with a pair of liner guides **25.** A workpiece is supported between centers of the left and right work heads **24, 26** rotatably around a horizontal axis line, and the workpiece can rotate by a spindle motor (not shown) at a workpiece rotation center position departing from a front surface of the machine and a floor surface by a certain distance.

On the other hand, a pair of linear guides **31** extending in a Z-axis direction parallel to a horizontal axis line of the workpiece is fixed on an upper surface of a rear portion of the bed **12.** The linear guide **31** guides a slide **33,** and the slide **33** is moved by a Z-axis linear motor **32.** A pair of linear guides **35** extending in a X-axis direction perpendicular to the Z-axis is fixed on an upper surface of the slide **33,** and a base **34** of the grinding wheel head **30** is guided and supported on the linear guides **35** so as to move forward or backward to the workpiece W by a X-axis linear motor **27.** The linear guides **31, 35,** the slide **33,** and the linear motors **27, 32** constitute a slide mechanism of the grinding wheel head **30** and a grinding wheel head feeder.

A bearing portion **37** is mounted on a front portion of the grinding wheel head **30,** and a grinding wheel shaft **38** of the grinding wheel G having a disk as a core is supported on the bearing portion **37** rotatably at a certain position from the front surface of the machine and the floor surface **B.** A pulley **39** fixed to the grinding wheel shaft **38** is connected to a pulley **41** fixed to an output shaft of a driving motor **40** through a belt **42** to rotate simultaneously, so that rotation power of the driving motor **40** can be transmitted to the grinding wheel shaft **38** and the grinding wheel **G.** A coolant supply nozzle **47** is mounted on the bearing portion **37,** so as to discharge the coolant supplied from a pipe line **47a** installed in the grinding wheel head **30** toward a neighborhood of grinding point which is a contact point of the workpiece W and the grinding wheel G.

Further, the grinding machine body **11** comprises the side enclosing cover **45** covering and enclosing the workpiece supporting driving device **20** and the grinding wheel head **30** disposed on the bed **12,** and a circumference of the slide mechanism. The side enclosing cover **45** is bent inside in the lower end portion thereof, and is fixed to a circumferential edge of the bed **12** by bolting. Further, the side enclosing cover **45** is formed to be higher than the workpiece supporting driving device**20** and the grinding wheel head **30,** so as to enclose the side portions of the workpiece supporting driving device**20** and the grinding wheel head **30.**

Furthermore, the inside of the side enclosing cover **45** is separated into a working area **61** where the workpiece supporting driving device **20,** the grinding wheel **G,** and the bearing portion **37** of the grinding wheel head **30** are located, and a sliding area **62** where the base **34** of the grinding wheel head **30,** the driving motor **40,** the linear guides **31, 35,** and the slide **33** etc. are located, and in an anteroposterior direction by a separating cover **66.** That is, a frame body **63** of rectangular shape comprising a passing hole through which the bearing portion **37** passes for entering from the sliding area **62** to the working area **61** is fixed to a front portion of the slide **33** through a supporting pole. Upper and lower outer ends of the frame body **63** are disposed near to a lower surface of an upper open/close cover **53** described below and an upper surface of the bed **12,** and left and right outer ends thereof are disposed as space is formed between left and right inner surfaces of the side enclosing cover **45,** so as to allow the slide **33** to move in the Z-axis direction. The space formed at an outside of the left and right outer ends of the frame body **63** is fixed to the left and right outer ends of the frame body **63** at one end thereof, and the other end is obscured by left and right accordion covers **64**a, **64**b fixed to the left and right inner surfaces of the side enclosing cover **45.** An interspace between an inner circumference of the passing hole of the bearing portion **37** formed in the frame body **63** by cutting and an outer circumference of the bearing portion **37** is fixed to the bearing portion **37** at one end thereof, and the other end is obscured by a passing hole accordion cover **65** fixed to an end portion of the passing hole of the frame body **63.** By the left and right accordion covers **64**a, **64**b and the passing hole accordion cover **65,** the separating cover **66** is formed, the cover **66** separating the inside of the side enclosing cover **45** into the working area **61** and the sliding area **62.**

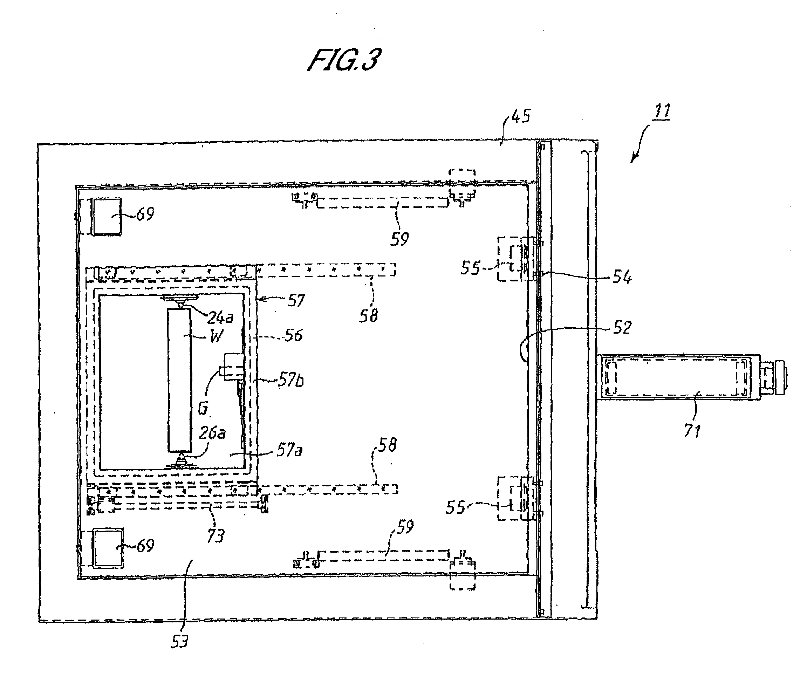

**FIG.3** is a plan view showing the grinding machine shown in **FIG.1** as an overhead view. An open port **52** to be an open portion capable of overlooking almost all of the working area **61** and the sliding area **62** is formed on an upper portion of the side enclosing cover **45,** and the upper open/close cover **53** is disposed on the open port **52.**

As shown in **FIG. 3,** the upper open/close cover **53** is formed to the size of covering the whole of the open port **52** and in the form of plates. A bracket **54** is mounted parallel to the linear guide **31,** on an upper end of the side enclosing cover **45** formed uprightly at the rear portion of the sliding area **62,** and by a pair of hinges **55** mounted on the bracket **54,** the upper open/close cover **53** is pivoted on the upper end of the side enclosing cover **45** in a rear position of the machine so as to be openable and closable by a turning mechanism.

Further, a pair of gas cylinders **59** to assist an open/close operation is installed in both sides of the bracket **54** and the upper open/close cover **53.** The gas cylinder **59** is installed in the upper open/close cover **53** at the rear portion thereof, and piston rods projecting from the top of cylinder are connected to the bracket **54,** so as to assist the open/close operation to an open position A shown in **FIG.1** of the upper open/close cover **53.** Furthermore, gas is encapsulated into the inside of gas cylinders **59,** so as to bias the upper open/close cover **53** in an extending direction of the cylinder shaft, that is, in an opening direction of the upper open/close cover **53** by the effect of the gas.

Further, a lever mechanism **69** is installed in a front portion of the upper open/close cover **53,** so as to be latched together with the side enclosing cover **45** and to prevent the upper open/close cover **53** from opening. When the lever mechanism **69** is released, the upper open/close cover **53** opens to the open position A by an effect of the cylinder, and if the upper open/close cover **53** is desired to be closed, a worker P moves the upper open/close cover **53** in a shrinking direction of the gas cylinder **59,** so that the upper open/close cover **53** is latched together at the close position by the effect of the lever mechanism **69.**

Then, the upper open/close cover **53** contacts the circumference edge of side enclosing cover **45,** so as to be separated from the outside of machine, and approaches the separation cover **66,** so as to separate the side enclosing cover **45** into the working area **61** and the sliding area **62.**

Therefore, if the upper open/close cover **53** is closed, the coolant is prevented from scattering outside from the working area **61,** and the coolant and the grinding dust are prevented from scattering from the working area **61** to the sliding area **62.**

On the other hand, a workpiece taking out port **56** as an opening portion is formed in a site of the upper open/close cover **53** corresponding to the workpiece W, so as to take out the workpiece W when the upper open/close cover **53** is closed, and an open/close door **57** is installed in the workpiece taking out port **56,** the door **57** being slidable in an anteroposterior direction so as to form an opening portion. Therefore, the taking out of workpiece W or the replacement of grinding wheel can be performed from the opening portion in an open condition of the open/close door **57.**

The open/close door **57** comprises a window portion **57a** formed of reinforced plastic, and a window frame **57b** in which the window portion **57a** is inserted, the frame **57b** supported by slide rails **58** mounted on the upper open/close cover **53** at the both end portions thereof. Further, a rodless cylinder **73** to automatically open/close the open/close door **57** is mounted beside one of the slide rails **58.**

Further, it is preferable that the length of open/close door **57** in the workpiece supporting direction is large enough for a part of the workpiece to be visible, and the length of open/close door **57** in the sliding direction of the grinding wheel head **30** is large enough for a part of the grinding wheel **G** to be visible from the open/close door **57** at the stop of the grinding work. At the grinding work, the workpiece **W** and the grinding wheel **G** contact each other, but at the stop of the grinding work, the workpiece **W** and the grinding wheel **G** depart from each other, therefore it is necessary to be visible from the open/close door **57** in order to confirm the state of the grinding wheel **G** and perform inspections etc. at the stop of the grinding work.

Further, it is preferable that the length of open/close door **57** in the workpiece supporting direction is larger than the maximum length of the workpiece **W,** and the length of open/close door **57** in the sliding direction of the grinding wheel head **30** is larger than the maximum diameter of the workpiece **W.** As described above, the function of open/close door **57** is to confirm the state of the grinding wheel **G** and perform inspection, but it is intended that the loading/unloading of the workpiece **W** can be also performed from the opening portion of the open/close door **57.** Because the replacement of grinding wheel **G** is conducted at an appropriate time according to the working frequency, but the replacement of workpiece **W** must be conducted at every working time, and if this is accompanied by the open/close operation of the upper open/close cover **53** or the slide open/close cover **53s,** a drastic decrease in the working efficiency or production efficiency is caused.

Again, referring to **FIG. 1,** a coolant chute **13** is installed in a part of the bed **12** forming a lower portion of the working area **61,** so as to receive the coolant discharged from the coolant supply nozzle **47** to the grinding point. An exhaust conduit **71** of a duct device **70** is inserted into the bed **12** from an opening portion of the rear surface.

The outer surface of exhaust conduit **71** is closed over the entire length, so as to form a fluid passage of rectangular cross-sectional shape capable of substantially keeping an air sealing, and the cross-sectional shape comprises a sectional area large enough for the coolant to flow at the lower portion of the rectangular cross-sectional shape, and simultaneously for a certain volume of mist to pass at the upper portion. Further, the exhaust conduit **71** extends immediately below the working area **61,** and the upper surface of top portion is opened, so as to enclose the outer circumference of lower end portion of the coolant chute **13** in an airtight condition, and to receive the fluid from an opening of lower end of the coolant chute **13.** A mist recovery conduit **72** branches from an opening of upper surface just before the rear end portion of the exhaust conduit **71,** and extends upward, so as to be connected to an inhalation port **60**a of a mist collector **60** mounted on a mounting board **74.** The mist collector **60** is publicly known, and operates to inhale the mist from the inhalation port **60**a by a vacuum effect and to separate the mist into air components and liquid components, for example, by centrifugal separation, so as to exhaust the air components to air and to reflux the liquid components to a coolant storage tank **52** of the coolant supply unit **51.**

The coolant supply unit **51** operates to store the coolant in the tank **52,** to pump up the coolant in the tank **52** by a pump unit (not shown), to send the coolant from a discharging pipe **67** to a pipe line **47**a through a flexible hose **68,** and to supply the coolant from the coolant supply nozzle **47** mounted on the bearing portion **37** to a neighborhood of the grinding point at which the grinding wheel **G** grinds the workpiece **W.**

Next, a grinding work in the first preferred embodiment, and along with this, a loading/unloading of the workpiece and a replacement of the grinding wheel will be explained.

The workpiece **W** is loaded after opened by an open/close operation of the upper open/close cover **53** or the slide open/close cover **53s.** Or, it is loaded from an opening portion after the open/close door **57** is opened. The worker P is located in a working space where the loading/unloading of the workpiece and the replacement of the grinding wheel can be conducted.

When the workpiece **W** is loaded between the left and right work heads **24, 26,** left and right servomotors (not shown) are driven, the left and right work heads **24, 26** get closer to each other by a left and right work head moving device, the workpiece **W** is sandwiched between left and right centers **24a, 26a,** the open/close door **57** is closed, and the grinding work is started. Left and right work head servomotors are rotated synchronously, the workpiece **W** is driven to rotate from both ends. The slide **33** is moved in the Z axis direction by a Z axis linear motor **32,** so as to align the grinding wheel **G** with a working site in the Z axis direction. A X-axis linear motor **27** is driven, the grinding wheel head **30** is carried forward at a fast feeding speed, a rough grinding feeding speed, an accurate grinding feeding speed, the coolant is supplied from the coolant supply nozzle **47** to a working zone by the coolant supply unit **51,** and the working site of the workpiece **W** is ground by the grinding wheel **G** driven to rotate by a driving motor **40** through a belt **42.**

The coolant supplied in the working zone lubricates and cools the grinding point where the grinding wheel **G** grinds the workpiece **W,** and drops into the coolant chute **13** opened just below the working zone together with the grinding dust, and is recovered in the coolant storage tank **51**a or the mist collector **60** through the exhaust conduit **71** together with the mist produced simultaneously.

The frame body **63** of the separating cover **66** is moved in the Z axis direction according to the movement of slide **33** in the Z axis direction, and the left and right accordion covers **64**a, **64**b fixed to left and right outer edges of the frame body **63** in one end thereof are elongated and contracted, so as to obscure a space formed between outsides of the left and right outer edges of the frame body **63** and left and right inner surfaces of the side enclosing cover **45.** When the bearing portion **37** of grinding wheel head **30** moves forward or backward in the X axis direction, a passing hole accordion cover **65** fixed to the outer circumference of the bearing portion **37** in one end thereof is elongated and contracted, so as to obscure an interspace between the bearing portion **37** and the passing hole. Further, in the upper part, the upper open/close cover **53** seals the grinding machine body **11** together with the side enclosing cover **45.**

Therefore, the separating cover **66** comprising the left and right accordion covers **64**a, **64**b and the passing hole accordion cover **65,** the upper open/close cover **37,** and the side enclosing cover **45** separate the inside of the side enclosing cover **45** into the working area **61** where the grinding wheel **G** grinds the workpiece **W** and the sliding area **62** where the grinding wheel head **30** is guided in the Z axis and X axis directions by the linear guides **31, 35,** so that a decrease in a guide accuracy and feeding accuracy can be prevented, the decrease in the accuracies being caused by the penetration of grinding dust and coolant into the linear guides **31, 35** and the linear motor **27, 32.**

When the grinding work of the workpiece **W** is completed, the grinding wheel head **30** is moved backward at a rapid feedrate, after the completion of backward movement of grinding wheel head **30** it is opened by the open operation of upper open/close cover **53,** slide open/close cover **53s** or open/close door **57,** the workpiece **W** is taken out to the outside of machine, and then one grinding cycle is completed.

And, at the time of replacement of grinding wheel, the worker P operates the lever mechanism **69,** so as to release the latched condition between the upper open/close cover **53** and the side enclosing cover **45.** The upper open/close cover **53** is whirled to the opening position A by an effect of the gas cylinder **59,** so that the upper open/close cover **53** is opened. When the upper open/close cover **53** is opened, the upper portions of working area **61** and sliding area **62** separated by the separating cover **66** are opened.

By this, the worker P can replace the grinding wheel **G** installed in the bearing unit **37** from the upside of grinding wheel head **30.** Further, at the replacement of grinding wheel all of the devices in the side enclosing cover **45** are visible, so that for example, states of the belt **42,** the linear guides **31, 35** etc. can be confirmed.

"Design Learning of Machine Tool (Basic Edition) " edited by Japan Machine Tool Builders' association (p.**64** to p.**66**), describes below. That is, "Usability in view of ergonomics generally is determined by factors such as **(1)** compatibility of size, **(2)** operability, **(3)** information display characteristic, **(4)** safety, **(5)** environmental adaptability, **(6)** design characteristic, **(7)** functionality. The compatibility of size means for example, a matching between a grip size of lever and a size of human hand or machine tool. The operability means a matching between human motility characteristic or muscle strength and an operation characteristic of the product itself. The information display characteristic means for example, a relationship between size, brightness etc. of character, figure etc. shown in display screen of NC unit and human visual feature. The safety means existence or nonexistence of factors causing harm to operators at the operation, and the environmental adaptability means existence or nonexistence of adverse effects on human beings by ambient noise, vibration, inadequate illumination, working liquid etc. The design characteristic, which is dependent on cultures of the period and the region, means whether the formative sense is preferred by workers. The functionality means whether it can functionally provide an adequate satisfaction, based on the factors described above. To satisfy the factors is very important for maximizing mental and physical ability of human beings having a limitation of "fatigue". Further, the fatigue decreases concentration power of workers, also becomes a source of accidents, and finally decreases the productivity of machine tool. It is generally difficult to satisfy all of the factors, so that consideration that priorities are set to each product is conducted. Recently, the safety, the environmental adaptability and the design characteristic have also been emphasized."

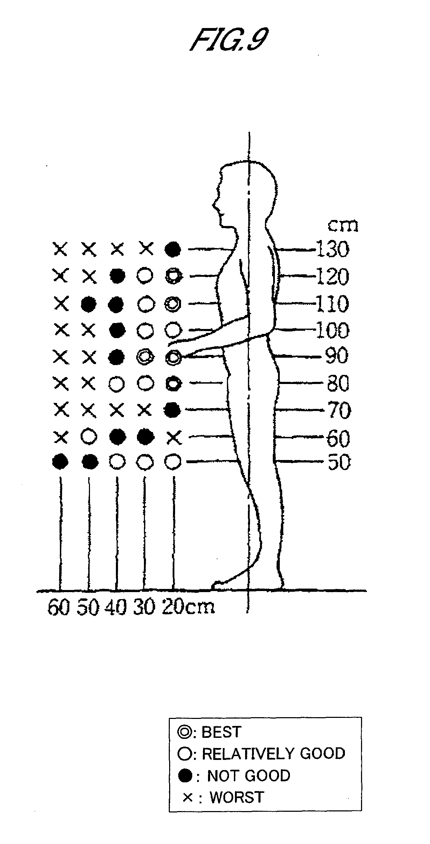

**FIG.9** is disclosed in the literature described above, and shows an evaluation result of an upright position working point in view of muscle activity and energy metabolism. By this, it is recognized that the vicinity of elbow height is preferable as an operation position, and no keeping from body position not less than **300** mm is also preferable.

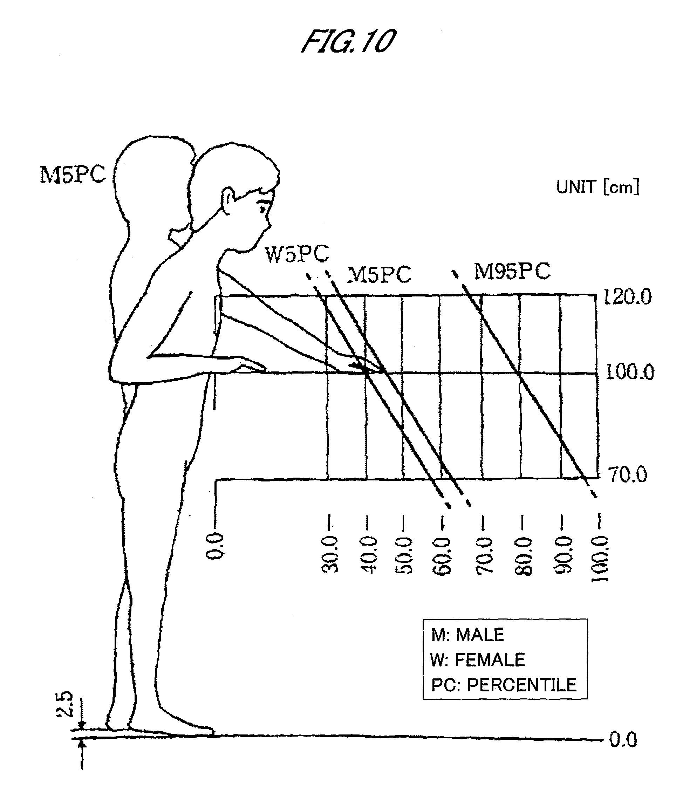

**FIG.10** is disclosed in the literature described above, and shows a front horizontal plane area to facilitate a working which is conducted near a height of body section. In case of M**5**PC (M**5**PC means a man having the **5**^{th}-lowest body height out of **100** men, and similarly, W**5**PC means a woman having the **5**^{th}-lowest body height out of **100** women, M**95**PC means a man having the **95**^{th}-lowest body height out of **100** men), it is recognized that the front side within **450** mm is a distance for a comfortable operation. Further, it shows that a distance for easy reach of hands changes along with a line inclined at angle of about **60** degrees to a floor face.

In FIG. **9** and **FIG.10**, the body heights of workers are based on the distribution shown in **FIG.2.7.1** in the literature described above.

When a position size of each part is ergonomically investigated based on the data described above, the results are shown below.

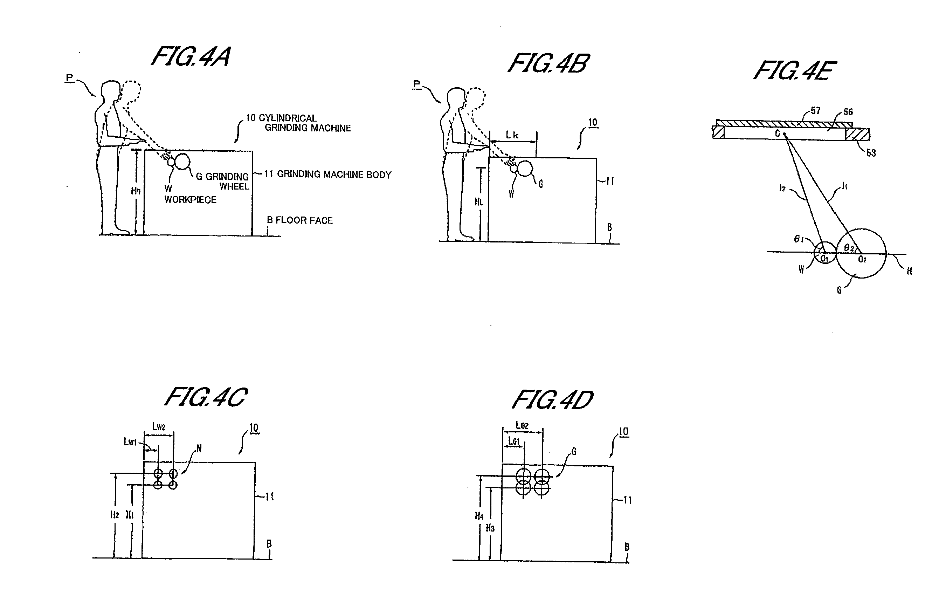

**FIGs.4A** to **4E** is a schematic view showing the position and dimensions of each part in the first preferred embodiment.

According to **FIG.9**, if more than **1200** mm, a preferable result of the upright position working point in view of muscle activity and energy metabolism can not be obtained. Therefore, in the first preferred embodiment, as shown in **FIG.4A**, it is preferable that the height of machine upper face (Hh) is not more than 1200 mm from the floor face **B**.

Further, according to **FIG.10**, if the workers P have body heights within the range of **90** % eliminated each **5** % in the upper and lower limits, when the workers P replace the workpiece **W** and the grinding wheel **G**, in a case that the height of machine upper face is **1000** mm, it is preferable that the opening portion is located within the range of **400** mm to **800** mm from the machine front face, and in a case that the height of machine upper face is **1200** mm, it is preferable that the opening portion is located within the range of **300** mm to **650** mm from the machine front face. Therefore, as shown in **FIG.4B**, it is preferable that the position **Lk** of the opening portion from the machine front face is not less than **600** mm.

Similarly, based on the ergonomic data in **FIG. 10,** as shown in **FIG.4C,** it is preferable that the rotation center position of the workpiece **W** is within a range of LW**1** to LW**2**, and LW**1** and LW2 are **200** mm and **400** mm respectively. Further, it is preferable that the position is within a range of H**1** to H**2** from the floor face **B,** and H**1** and H**2** are **850** mm and **1000** mm respectively.

Further, as shown in **FIG.4D,** it is preferable that the rotation center position of the grinding wheel shaft **38** is within a range of LG**1** to LG**2**, and LG**1** and LG**2** are **250** mm and **500** mm respectively. Further, it is preferable that the position is within a range of H**3** to H**4** from the floor face **B,** and H**3** and H**4** are **850** mm and **1000** mm respectively.

For the reason described above, in a case that the loading/unloading of the workpiece and the replacement of the grinding wheel are conducted, for example, from the opening portion of open/close door **57** shown in **FIG.3**, it is preferable that the opening portion is formed within a range obtained by a calculation that based on the ergonomic data in **FIG.10**, from numerical values of **300** mm to **800** mm from the machine front face, and **1000** mm to **1200** from the floor face, in consideration of workability of the workers of the M**5**PC and W**5**PC sides, adjusted values of **100** mm are reduced, that is, the range is **200** mm to **700** mm from the machine front face, and **900** mm to **1100** mm from the floor face.

Further, the rotation center position of the workpiece **W** is disposed within a range of **200** mm to **400** mm, and **850** mm to **1000** mm from the floor face **B**, and also the rotation center position of the grinding wheel shaft **38** is disposed within a range of **250** mm to **500** mm, and **850** mm and **1000** mm from the floor face **B,** so that the ergonomic data described above can be satisfied.

Simultaneously, it is preferable that the straight line extending from the center position of opening portion of open/close door **57** to the rotation axis of the workpiece **W** and the rotation axis of the grinding wheel shaft **38** perpendicularly is almost along with the line of about **60** degrees previously shown in **FIG.10,** for example; lines within a range of **45** degrees to **75** degrees. Further, the center position of the opening portion of the open/close door **57** means an intersection of two diagonal lines of a rectangular opening portion of the open/close door **57** shown in **FIG.3.**

**FIG.4E** shows the lines l₁ and l₂. Further, the upper open/close cover **53** comprises the workpiece taking out port **56** formed as an opening portion, and the open/close door **57** is formed on the opening portion. It is preferable that the inclined angles **O₁, O₂** of the lines l**₁** and l**₂** perpendicular to the center position C of the opening portion, the rotation axis **O** of the workpiece **W** and the rotation axis O₂ of the grinding wheel shaft **38** to the line H parallel to the floor face are within a range of **45** degrees to **75** degrees.

Further, it is preferable that the grinding wheel comprises CBN (Cubic Boron Nitride) grinding wheel, a disk for grinding wheel Wh comprises aluminum, titanium or those alloys, and the outer diameter of the grinding wheel **G** is not less than **100** mm and not more than **200** mm.

According to the first preferred embodiment described above, the easy maintenance and inspections of mechanisms arranged therein, an increase in visibility when the states of a workpiece and a grinding wheel are confirmed, and the easy loading/unloading of the workpiece and the easy replacement of the grinding wheel can be enhanced.

Further, the machine (grinding machine) comprising the height of the machine upper surface, the rotation center position of the workpiece **W,** and the position of the grinding wheel shaft **38,** as shown by dotted lines in **FIG.4A** and **FIG.4B,** enables the workers P to load/unload the workpiece and replace the grinding wheel mainly by arm operation without motions putting stress on their waists such as stretch motion, bow motion, so that the working efficiency and the productivity can be enhanced, and also the safety of the workers can be enhanced. Further, the grinding wheel comprising CBN can be formed to be smaller in the outer diameter, and the disk Wh comprising aluminum, titanium or those alloys can be formed to be lighter in the weight, and also by this the working efficiency, the productivity, and also the safety of the workers can be enhanced.

Further, in the first preferred embodiment a structure that the hinge **55** is mounted in the rear position of side enclosing cover **45** so as to allow the upper open/close cover **53** to be openable and closable from the front portion to the rear portion has been explained, but the invention is not limited to such a structure, the other structure that the hinge **55** is mounted in the upper position on the side of side enclosing cover **45** so as to allow the upper open/close cover **53** to be openable and closable in the side portion of the grinding machine body **11** can be adopted. Furthermore, the mounting method is also not limited to a method using the hinge **55,** but any mechanism that can swivel the upper open/close cover **53** can be adopted.

### Second embodiment

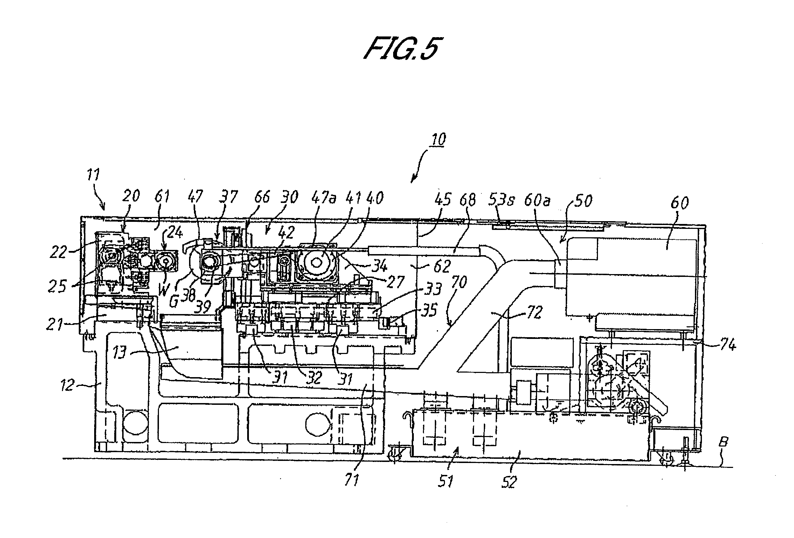

**FIG.5** is a side view showing a cylindrical grinding machine in a second preferred embodiment according to the invention.

The cylindrical grinding machine **10** comprises a slide open/close cover **53**s to slide from the front portion to the rear portion based on a horizontal slide mechanism being public known, instead of swiveling the upper open/close cover **53.**

In order to allow the slide open/close cover 53s to slide from the front portion to the rear portion, it is necessary that the height of attachment device **50** is installed lower than the sliding height of slide open/close cover **53**s, so as to prevent the attachment device **50** installed in the rear portion of grinding machine body **11** from interfering.

Also in the second preferred embodiment, similarly to the first preferred embodiment, it is preferable that the values of the height of machine upper face (Hh), the rotation center position of the workpiece **W** (LW**1,** LW**2**, H**1,** H**2**), and the rotation center position of the grinding wheel shaft **38** (LG**1**, LG**2**, H**3**, **H4)** are similar to the values described in the first preferred embodiment.

Further, it is preferable that the grinding wheel comprises CBN (Cubic Boron Nitride) grinding wheel, a disk for grinding wheel Wh comprises aluminum, titanium or those alloys, and the outer diameter of the grinding wheel **G** is not less than **100** mm and not more than **200** mm.

According to the second preferred embodiment described above, similarly to the first preferred embodiment, the easy maintenance and inspections of mechanisms arranged therein, an increase in visibility when the states of the workpiece **W** and the grinding wheel **G** are confirmed, and the easy loading/unloading of the workpiece and the easy replacement of the grinding wheel can be enhanced. Further, the slide open/close cover **53**s does not need an open/close space in the upper direction, and does not need a power against gravity at the open/close operation, so that the open/close operation can be realized by a simple slide mechanism, and can be easily performed by the workers P.

### Third embodiment

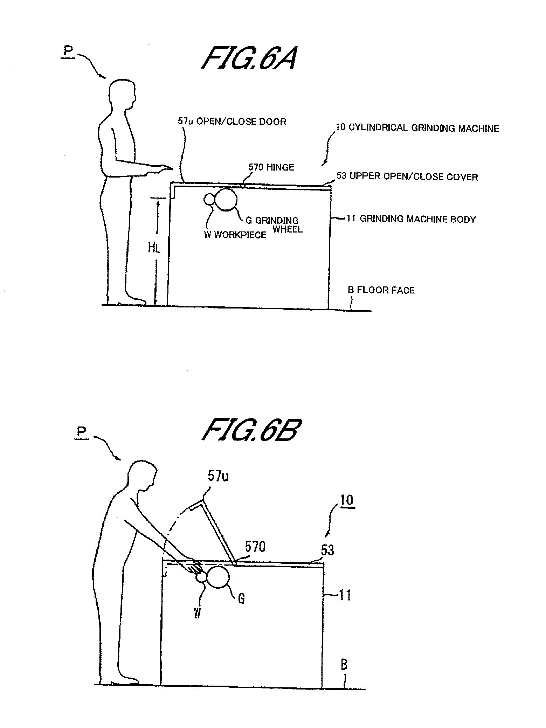

**FIG. 6A** is a schematic view showing a cylindrical grinding machine in a third preferred embodiment when an upper open/close door **57u** is closed, and **FIG.6B** is a schematic view showing a cylindrical grinding machine in the third preferred embodiment when the upper open/close door **57u** is opened.

As shown in **FIG.6A,** the cylindrical grinding machine 11 comprises an open/close door **57**u as an opening portion in the upper open/close cover **53,** by which the upper surface and/or the front surface of the machine can be opened/closed with a central focus on the hinge **570.** As shown in **FIG.6B,** the open/close door **57**u is opened by the workers P with a central focus on the hinge **570** by hand, so that the workers P can contact the grinding wheel **G** and the workpiece **W**. In this case, it is preferable that the height (H_{L}) of the lower end of opening portion of machine front surface is not less than **1000** mm from the bottom surface.

Also, it is preferable that the values of the height of machine upper face (Hh), the rotation center position of the workpiece **W** (LW**1**, LW**2**, H**1**, H**2**), and the rotation center position of the grinding wheel shaft **38** (LG**1**, LG**2**, H**3**, H**4**) are similar to the values described in the first preferred embodiment.

Further, it is preferable that the grinding wheel comprises CBN (Cubic Boron Nitride) grinding wheel, a disk for grinding wheel Wh comprises aluminum, titanium or those alloys, and the outer diameter of the grinding wheel **G** is not less than **100** mm and not more than **200** mm.

According to the third preferred embodiment described above, as shown in **FIG.6B,** with just the opening operation in the upper direction of open/close door **57**u by the workers P, the easy loading/unloading of the workpiece **W** and the easy replacement of the grinding wheel and the increase in visibility when the states of the workpiece **W** and the grinding wheel **G** are confirmed can be enhanced. Further, as shown in **FIGs. 6A, 6B,** the workers can load/unload the workpiece and replace the grinding wheel mainly by arm operation without motions putting stress on their waists such as stretch motion, bow motion.

### Fourth embodiment

**FIG. 7A** is a schematic view showing a cylindrical grinding machine in a fourth preferred embodiment when an open/close door of sliding type is closed, and **FIG. 7B** is a schematic view showing a cylindrical grinding machine in the fourth preferred embodiment when the open/close door of sliding type is opened.

As shown in **FIG.7A**, the cylindrical grinding machine **10** comprises an open/close door **57**s to slide from the front portion to the rear portion on the machine upper surface so as to be openable and closable as an opening portion in the upper open/close cover **53**. The open/close door **57**s slides on the machine upper surface by hand of the workers P or an open/close mechanism (not shown), so that as shown in **FIG.7B** the workers P can contact the grinding wheel G and the workpiece **W**. Further, also in the fourth preferred embodiment, it is preferable that the height (H_{L}) is not less than **1000** mm from the bottom surface.

According to the fourth preferred embodiment described above, in addition to the preferable advantages of the first preferred embodiment, as shown in **FIG. 7B,** with just the opening operation due to the sliding of open/close door 57s by the workers P, the easy loading/unloading of the workpiece **W** and the easy replacement of the grinding wheel and the increase in visibility when the states of the workpiece **W** and a grinding wheel **G** are confirmed can be enhanced. In this case, the workers P can conduct the opening operation more easily due to the sliding of open/close door **57**s than the structure shown in **FIG.6A**, and can also keep the open/close door **57**s as it is.

### Fifth embodiment

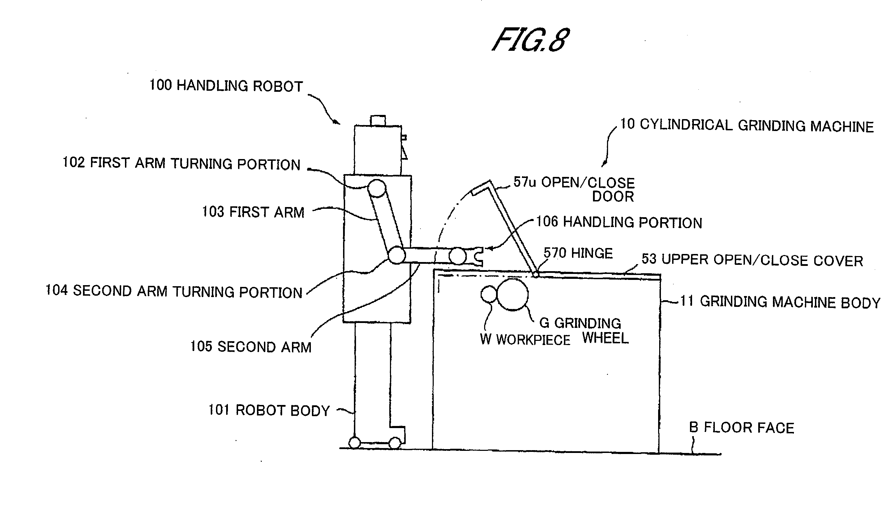

**FIG.8** is a side view showing a fifth preferred embodiment. In the fifth preferred embodiment, a handling robot conducts the loading/unloading of the workpiece **W** and the replacement of the grinding wheel **G.**

The handling robot **100** comprises a robot body **101,** a first arm **103** mounted on the robot body **101** through a first arm turning portion **102** being rotatable, a second arm **105** mounted through a second arm turning portion **104** being rotatable, and a handling portion **106** mounted on the end portion of second arm **105** apart from the robot body **101,** the portion **106** being rotatable and capable of grasping. Further, the handling robot **100** comprises a control means and actuators at each part (not shown) based on public known technical means, so that for example, the handling robot **100** performs works, such as the loading/unloading of the workpiece **W** and the replacement of the grinding wheel **G** based on a remote control by an operator.

In the works of the loading/unloading of the workpiece **W** and the replacement of the grinding wheel **G,** first, the handling robot **100** is moved to such a position that the robot body **101** does not contact the machine front surface. Next, the first arm **103** and the second arm **105** are operated to allow the handling portion **106** to approach, and grasp or release the objective workpiece **W** or grinding wheel **G,** so that the workpiece **W** can be carried in/out or the grinding wheel **G** can be replaced.

Further, it is preferable that the height of the upper open/close cover **53,** the slide open/close cover **53**s, or the machine upper surface or the lower end of the opening portion is not higher than such a height that the loading/unloading of the workpiece **W** and the replacement of the grinding wheel **G** can be conducted from a working space, centering around the lift up/down operation. Alternatively, it is preferable that the height of the upper open/close cover **53,** the slide open/close cover **53**s, or the machine upper surface or the lower end of the opening portion is not higher than a height of the arm turning portion nearest to the handling portion **106** of the handling robot **100.**

Since two arms are used in the preferred embodiment, so that the nearest arm turning portion corresponds to the second arm turning portion **104.** Further, the handling robot **100** can be replaced with the workers P.

According to the structure described above, even if the loading/unloading of the workpiece **W** and the replacement of the grinding wheel **G** are conducted by the handling portion **106,** the arm portion and the handling portion never contact the machine or the cover at the operation of the handling robot **100.** Further, the loading/unloading of the workpiece **W** and the replacement of the grinding wheel **G** can be conducted from a working space, centering around the lift up/down operation, and also can be conducted mainly with a central focus on the operation of arm portion, so that the handling robot is not required to move up/down and can prevent vain consumption of energy.

The operation of the handling robot **100** described above is applicable to the operation of the worker P of a human being. The first arm turning portion **102** of the handling robot **100** corresponds to a human shoulder, the first arm corresponds to an upper arm, the second arm turning portion **104** corresponds to an elbow, the second arm **105** corresponds to a front arm, and the handling portion **106** corresponds to a hand including a wrist.

Therefore, if a human being or the handling robot equivalent to a human being is set as the workers P, similarly to the first preferred embodiment, it is preferable that the values of the height of machine upper face (Hh), the rotation center position of the workpiece **W** (LW**1**, LW**2,** H**1**, H**2**), and the rotation center position of the grinding wheel shaft **38** (LG**1**, LG**2,** H**3**, H**4**) are similar to the values described in the first preferred embodiment.

Further, it is preferable that the grinding wheel comprises CBN (Cubic Boron Nitride) grinding wheel, a disk for grinding wheel Wh comprises aluminum, titanium or those alloys, and the outer diameter of the grinding wheel **G** is not less than **100** mm and not more than **200** mm.

According to the fifth preferred embodiment, the easy loading/unloading of the workpiece and the easy replacement of the grinding wheel can be enhanced. Further, if a human being or the handling robot comprising an object recognition tool equivalent to a human being is set as the workers P, similarly to the other preferred embodiments, the easy maintenance and inspections of mechanisms arranged therein, and an increase in visibility when the states of the workpiece and the grinding wheel are confirmed can be enhanced, and the working efficiency, the productivity and the safety of the workers can be also enhanced.

## Claims

1. A grinding machine, comprising:
a workpiece supporting/driving device anteriorly mounted on a bed, and supporting a workpiece to be rotatably driven;
a grinding wheel head comprising a bearing portion supporting a wheel spindle to be rotatably driven on which a grinding wheel is mounted, and a base mounted over the bed to be relatively movable to the workpiece through a grinding wheel head sliding mechanism;
a grinding wheel head feeder moving the grinding wheel head forward or backward to the workpiece supporting/driving device;
a coolant supply unit supplying a coolant to a working area in which the grinding wheel grinding processing the workpiece;
a cover covering internal devices such as the workpiece supporting/driving device, the grinding wheel head, the grinding wheel head feeder, the coolant supply unit; and
an open/close door formed on a part of an upper surface in working space side of the cover, being capable of at least loading/unloading of the workpiece and replacing the grinding wheel.

2. The grinding machine according to claim 1, wherein:
the cover comprises an upward open/close door or a sliding open/close door at least a part of the upper surface.

3. The grinding machine according to claim 2, wherein:
the open/close door is formed on the upward open/close door or the sliding open/close door.

4. The grinding machine according to claim **2,** wherein:
the open/close door is formed within a region of not less than **200** mm and not more than **700** mm from the front face of machine, and not less than **900** mm and not more than **1100** mm from a floor face.

5. The grinding machine according to claim **1** or **3,** wherein:
the open/close door comprises large size enough for a part of the workpiece to be visible in the workpiece supporting direction, and the open/close door comprises large size as a length in a sliding direction of the grinding wheel head enough for a part of the grinding wheel to be visible from the open/close door in the sliding direction of the grinding wheel head at the stop of the grinding work.

6. The grinding machine according to claim **1** or **3,** wherein:
the open/close door comprises the size larger than the maximum length of the workpiece in the workpiece supporting direction and larger than the maximum diameter of the grinding wheel head in the sliding direction.

7. The grinding machine according to any one of claims **1** to **6,** wherein:
the workpiece comprises a rotation center position at not less than **200** mm and not more than **400** mm from the front face of machine, and comprises a rotation center position at not less than **850** mm and not more than **1000** mm from the floor face.

8. The grinding machine according to any one of claims **1** to **6,** wherein:
the wheel spindle comprises a center position thereof at not less than **250** mm and not more than **500** mm from the front face of machine, and at not less than **850** mm and not more than **1000** mm from the floor face.

9. The grinding machine according to claim **7** or **8,** wherein:
the open/close door is formed on a region in which the workpiece or the grinding wheel head is replaceable in an open condition.

10. The grinding machine according to any one of claims **1** to **6,** wherein:
the grinding machine comprises a height of not less than **900** mm and not more than **1100** mm from the floor face.

11. The grinding machine according to any one of claims **1** to **6,** wherein:
the grinding wheel comprises an outer diameter of not less than **100** mm and not more than **200** mm, and comprises CBN grinding wheel having aluminum or titanium disk as a core.

12. A grinding machine, comprising:
a workpiece supporting/driving device anteriorly mounted on a bed, and supporting a workpiece to be rotatably driven;
a grinding wheel head comprising a bearing portion supporting a wheel spindle to be rotatably driven on which a grinding wheel is mounted, and a base mounted over the bed to be relatively movable to the workpiece through a grinding wheel head sliding mechanism;
a grinding wheel head feeder moving the grinding wheel head forward or backward to the workpiece supporting/driving device;
a coolant supply unit supplying a coolant to a working area in which the grinding wheel grinding processing the workpiece; and
a cover covering internal devices such as the workpiece supporting/driving device, the grinding wheel head, the grinding wheel head feeder, the coolant supply unit, and formed below a height of an arm turning portion just proximal to a handling portion of a working robot performing a lift up/down operation, so that a loading/unloading the workpiece and a replacement of the grinding wheel can be conducted from a working space in a front face, centering around the lift up/down operation in the internal portion of the grinding machine.

13. The grinding machine according to claim **12**, wherein:
the cover comprises an open/close door within a region in which the lift up/down operation can be performed.

14. The grinding machine according to claim **12**, wherein:
the loading/unloading of the workpiece, the replacement of the grinding wheel, and the lift up/down operation are conducted by the robot.

15. The grinding machine according to claim **14**, wherein:
the cover is formed below the height of the turning portion of the robot.

16. A grinding machine, comprising:
a workpiece supporting portion supporting a workpiece to be processed on a first rotating shaft;
a grinding wheel supporting portion supporting a grinding wheel to process the workpiece on a second rotating shaft;
a side cover enclosing the workpiece supporting portion and the grinding wheel supporting portion from the side;
a upper cover enclosing a first opening portion formed on the upper side by the side cover; and
an open/close member formed on a working space side of the upper cover, to open/close a second opening portion for a loading/unloading of the workpiece, and a replacement of the grinding wheel; and
the second opening portion is formed on the upper cover, so that a straight line perpendicular to the first and second turning shafts in a center position thereof comprises a certain inclined angle to a floor face.

17. The grinding machine according to claim **16**, wherein:
the second opening portion is formed on the upper cover, so as to comprise an inclined angle of **45** degrees to **75** degrees as the certain inclined angle.
